(19) Europäisches Patentamt
European Patent Office
Office européen des brevets

(11) **EP 0 648 025 B1**

(12) **EUROPÄISCHE PATENTSCHRIFT**

(45) Veröffentlichungstag und Bekanntmachung des Hinweises auf die Patenterteilung:
**21.05.2003  Patentblatt 2003/21**

(51) Int Cl.⁷: **H04B 7/00**

(21) Anmeldenummer: **94115599.6**

(22) Anmeldetag: **04.10.1994**

(54) **Verfahren zur Anpassung des Mittelabgriffs des Transversal entzerrers in einem System zur Kreuzpolarisationskompensation**

Method for the adjustment of the centre tap of the transversal equaliser in a system for cross-polarisation compensation

Procédé pour l'adaptation de la prise centrale de l'égaliseur transversal dans un système de compensation de polarisation croisée

(84) Benannte Vertragsstaaten:
**CH DE IT LI**

(30) Priorität: **08.10.1993  DE 4334400**

(43) Veröffentlichungstag der Anmeldung:
**12.04.1995  Patentblatt 1995/15**

(73) Patentinhaber: **Siemens Mobile Communications S.p.A.**
**20126 Milano (IT)**

(72) Erfinder: **Schmidmaier, Richard, Dipl.-Ing.- D-80769 München (DE)**

(74) Vertreter: **Heusler, Wolfgang, Dipl.-Ing. et al v. Bezold & Sozien, Patentanwälte, Akademiestrasse 7 80799 München (DE)**

(56) Entgegenhaltungen:
**EP-A- 0 281 308**

- **TRANSACTIONS OF THE INSTITUTE OF ELECTRONICS, INFORMATION AND COMMUNICATION ENGINEERS OF JAPAN, Bd.E73, Nr.3, März 1990, TOKYO JP Seiten 401 - 408, XP000117096 H.OHTSUKA ET AL. 'THE SBS CONTROL ALGORITHM OF CROSS POLARIZATION INTERFERENCE CANCELLER ON DIGITAL RADIO SYSTEMS'**

## Beschreibung

Die Erfindung bezieht sich auf ein Verfahren zur Kanalentzerrung und Kompensation von Kreuzpolarisations-Interferenzen (XPI) in Übertragungssystemen mit vielstufiger Quadratur-Amplitudenmodulation (QAM) oder Pulsamplitudenmodulation (PAM) unter Verwendung von adaptiven Transversalfiltern mit nachfolgendem Entscheider und Korrelator zur Gewinnung der Koeffizienten für die Einstellung des Entzerrers.

Bei Übertragungssystemen, die ein QAM- oder PAM-Verfahren zur Modulation benutzen, ist die richtige Einstellung des Mittelabgriffs des Entzerrers (center tap $C_0$) extrem wichtig. Der Mittelabgriff des Entzerrers zeichnet sich dadurch aus, daß er bei verzerrungsfreiem Kanal als einziger Abgriff von Null verschieden ist und somit die gesamte Signalverstärkung festlegt. Er liegt nicht notwendigerweise geometrisch genau in der Mitte des Entzerrers, d.h. der Entzerrer kann eine unterschiedliche Zahl von Vor- und Nachläufer haben. In Anwesenheit von Kanalverzerrungen ist es von entscheidender Bedeutung, daB sich der Mittelabgriff auf den richtigen Wert einstellt. Steht der Mittelabgriff $C_0$ auf einem falschen Wert, können sich in vielen Fällen auch die übrigen Abgriffe des Entzerrers sowie die Koeffizienten des XPI-Kompensators (XPIC) nicht richtig einstellen, und das System bleibt in einem Falschfangzustand hängen.

Bei M-QAM mit M > 4 existieren für den Mittelabgriff des Entzerrers mehrere mögliche Einrastzustände, von denen aber nur einer richtig ist. Deshalb kommt es z.B. bei 64 QAM immer wieder vor, daß der Entzerrer nach dem Setzen auf einen falschen stabilen Zustand läuft und nur durch erneutes Setzen unter Umständen richtig einläuft. Eine beschränkte Abhilfe kann man dadurch erzielen, daß der Startwert des Mittelabgriffs wesentlich größer als der Nominalwert gewählt wird.

Der Erfindung liegt die Aufgabe zugrunde, eine einfache Lösung anzugeben für die Adaption des Mittelabgriffs des Entzerrers zur Vermeidung falscher Fangzustände.

Diese Aufgabe wird mit einem Verfahren der eingangs beschriebenen Art erfindungsgemäß gelöst durch einen MMLE (Maximum/Minimum-Level-Error)-Algorithmus mit einer eindimensionalen Fehlerschablone zur richtigen Einstellung des Mittelabgriffs des Entzerrers derart, daß zur Ermittlung der Fehlersignale von Inphase-Anteil und Quadratur-Anteil das entzerrte Signal vor dem Entscheider und der entschiedene Wert voneinander subtrahiert und zur Fehlerwertung die Fehlersignale auf den MMLE-Algorithmus gegeben werden, der in seiner Fehlerschablone Anteile enthält, die einen zu geringen Pegel erkennen, sowie Anteile, die auf zu große Pegel reagieren und daß aus den Fehlern Signale gebildet werden, indem abhängig vom entzerrrten Signal der Fehler entweder durchgeschaltet oder ausgeblendet und mit Hilfe dieser Signale die Adaption vorgenommen wird.

Vorteilhafte Ausgestaltungen und Weiterbildungen des Erfindungsgegenstandes sind in den Unteransprüchen angegeben.

Das erfindungsgemäße Verfahren mit dem MMLE-Algorithmus für die Adaption von $C_0$ besitzt nur einen, und zwar den richtigen Fangzustand. Der MMLE-Algorithmus erlaubt die richtige Akquisition von allen Startwerten aus und verhindert auch bei XPIC-Betrieb falsche Einrastzustände. Der Algorithmus ist unabhängig davon, ob der Mittelabgriff des Entzerrers im Filter selbst implementiert ist oder als eigenständige AGC dem Entzerrer nachgeschaltet bzw. vorgeschaltet ist.

Nachstehend wird die Erfindung anhand von in der Zeichnung dargestellten Ausführungsbeispielen näher erläutert.

Es zeigen:

Figur 1    eine Anordnung zur Entzerrung und Kreuzpolarisationskompensation eines QAM-Signals unter Verwendung des bekannten MLE-Algorithmus (Maximum-Level-Error),

Figur 2    eine Fehlerschablone beim MLE-Algorithmus am Beispiel eines 64 QAM-Systems,

Figur 3    eine Anordnung entsprechend Figur 1 unter Verwendung eines MMLE-Algorithmus,

Figur 4    eine Fehlerschablone beim MMLE-Algorithmus am Beispiel eines 64 QAM-Systems und

Figur 5    in zwei Diagrammen den Erwartungswert des Ausgangs des $C_0$-Korrelators über der Stellung von $C_0$ für Korrelation ohne und mit MMLE.

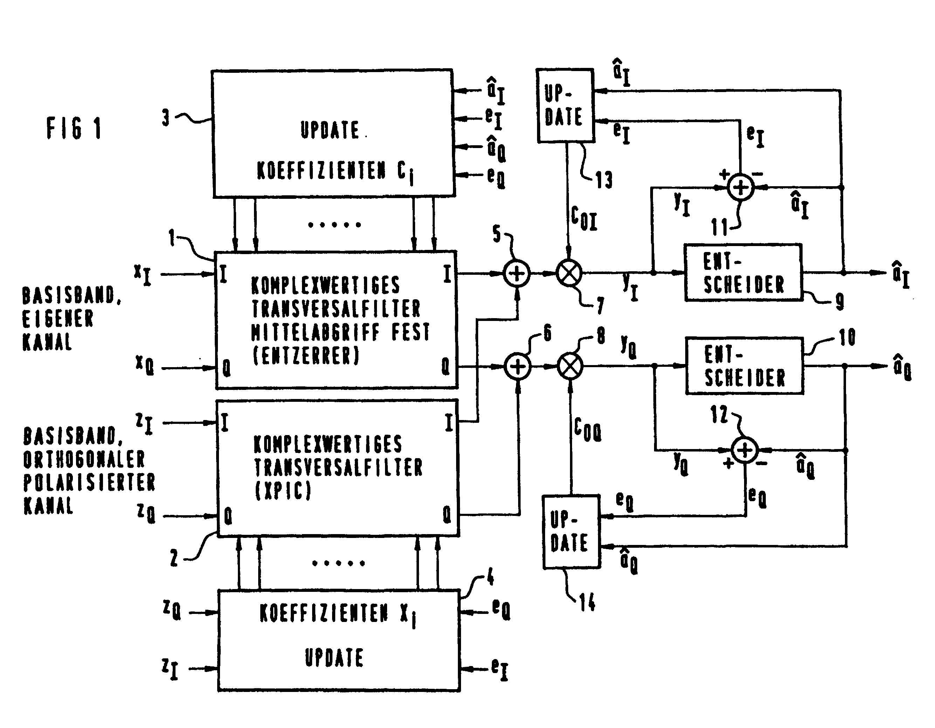

Die Anordnung zur Entzerrung und Kreuzpolarisationskompensation eines QAM-Signals gemäß Figur 1 besteht aus einem komplexwertigen Transversalfilter 1 mit nachgeschalteter AGC(Automatic Gain Control) als Entzerrer und einem komplexwertigen Transversalfilter 2 für die XPIC-Funktion. Der Mittelabgriff des Entzerrers ist also hierbei dem Entzerrer und dem Einkoppelpunkt des XPICs als AGC nachgeschaltet. Beide Transversalfilter haben die Länge $2 \cdot L + 1$. Die Koeffizienten des Entzerrers sind mit $C_i$ bezeichnet, wobei $-L \leq i \leq L$ ist. Hier wird von einem Entzerrer ausgegangen, der gleich viele Vor- und Nachläufer-Abgriffe besitzt. Für die Koeffizienten des XPICs ist die Bezeichnung $Xi$ gewählt mit $-L \leq i \leq L$. Die Koeffizienten $C_i$ werden dem komplexwertigen Transversalfilter 1 mit festem Mittelabgriff (Entzerrer) von einer Update-Einheit 3 zugeführt, an der die Größen $\hat{a}_I$, $e_I$, $\hat{a}_Q$ und $e_Q$ anliegen. Die Koeffizienten $Xi$ werden dem komplexwertigen Tranversalfilter 2 für die XPIC-Funktion von einer Update-Einheit 4 zugeführt, an der die Größen $e_Q$, $e_I$ sowie $z_Q$ und $z_I$ anliegen.Dem komplexwertigen Transversalfilter 1 (Entzerrer) wird das Basisband im eigenen Kanal, dem komplexwertigen Transversalfilter 2 (XPIC) das Basisband im orthogonal polarisierten Kanal zugeführt. Der Inphase- und Quadratur-Anteil der Signale ist mit den Indizes I bzw. Q bezeichnet. Die Ausgänge für den I-Anteil und den Q-Anteil den beiden Transversalfilter 1 und 2 sind jeweils über ein Summierglied 5, 6 zusammengeführt. Den Summiergliedern 5, 6 sind Stellglieder 7, 8 mit den Koeffizienten $C_{0I}$ bzw. $C_{0Q}$ nachgeschaltet, an die ausgangsseitig jeweils ein Entscheider 9, 10 angeschlossen ist.

Das Signal vor dem Entzerrer 1 ist mit $x_I$ bzw. $x_Q$ bezeichnet, das Signal vor den Entscheidern 9, 10 mit $y_I$ bzw. $y_Q$ und der entschiedene Wert mit $\hat{a}_I$ bzw. $\hat{a}_Q$. Die zur Adaption der Koeffizienten notwendigen Fehlerwerte werden in Subtrahiergliedern 11, 12 folgendermaßen erhalten:

$$e_I(n) = y_I(n) - \hat{a}_I(n) \tag{1}$$

$$e_Q(n) = y_Q(n) - \hat{a}_Q(n)$$

Die Fehlerwerte $e_I$ bzw. $e_Q$ werden auf jeweils eine, aus einem Multiplizierer und Korrelator bestehende Update-Einheit 13 bzw. 14 gegeben, der außerdem ein Referenzsignal (im Ausführungsbeispiel die entschiedenen Werte $\hat{a}_I$ bzw. $\hat{a}_Q$) zugeführt wird. Das Ausgangssignal der Update-Einheiten 13, 14 bildet bildet jeweils die Stellgröße für die Stellglieder 7 bzw. 8.

Sowohl für die Enzerrer- als auch für die XPIC-Koeffizienten ist es vorteilhaft, während der Aquisitionsphase den Adaptionsalgorithmus so zu modifizieren, daß Falschfangzustände soweit wie möglich ausgeschlossen werden. Der in der Literaturstelle "The Adaptive Transversal Equalizer for 90 MBPS 64 QAM Radio Relay System", ICC 1984, S. 1003-1006, von Koji Aoki, Hiroshi Yamada, Koji Ikuta, Sadao Takenaka und Yoshimasa Daido erwähnte MLE-Algorithmus ist eine Möglichkeit, dies zu erreichen. Dabei werden die Fehlerbeiträge e(n) nur dann verwendet, wenn sie mit hoher Wahrscheinlichkeit das richtige Vorzeichen aufweisen. Dies ist dann der Fall, wenn der Betrag von y(n) größer als das größte im Codealphabet verwendete â(n) ist. In den anderen Fällen wird statt e(n) der Wert Null in der Korrelation verwendet, d.h. dieses Symbol liefert keinen Beitrag.

In der Druckschrift EP-A-0281308 werden die Fehlersignale nur dann zur Auswertung weitergegeben, wenn das empfangene Signal größer als ein bestimmter Schwellwert ist.

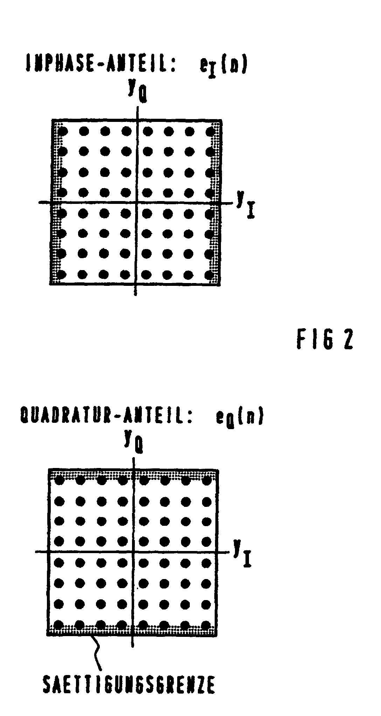

Der Gültigkeitsbereich des Fehlers e(n) beim MLE-Algorithmus ist in Figur 2 am Beispiel eines 64 QAM-Systems dargestellt. Dabei sind getrennte Darstellungen für den Inphase-Anteil $e_I(n)$ und den Quadratur-Anteil $e_Q(n)$ des Fehlers vorgesehen. In den 4 Quadranten des Koordinatensystems mit den Achsen $y_I$ und $y_Q$ sind jeweils 16 Punkte eingetragen, die mögliche Symbole in der IQ-Ebene darstellen. Der grau eingezeichnete Gültigkeitsbereich des Fehlers befindet sich jeweils am äußeren Rand zur Sättigungsgrenze hin und zwar für den Inphase-Anteil am rechten und linken Rand und beim Quadratur-Anteil am oberen und unteren Rand.

Es zeigt sich, daß der MLE-Algorithmus für $C_0$ nicht funktionieren kann. Da nämlich bei dem MLE-Verfahren e(n) immer das gleiche Vorzeichen aufweist wie â(n), erhält der Mittelabgriff bei jedem Adaptionsschritt einen negativen Beitrag. Das geht solange, bis keine y(n) Werte mehr über die Schwelle des maximalen â(n) fallen. Dies bedeutet im allgmeinen ein fast völliges Verschwinden des Signals. Daher muß der Mittelabgriff entweder nicht-robust, d.h. ohne MLE adaptiert werden oder es ist ein neues Verfahren zu finden.

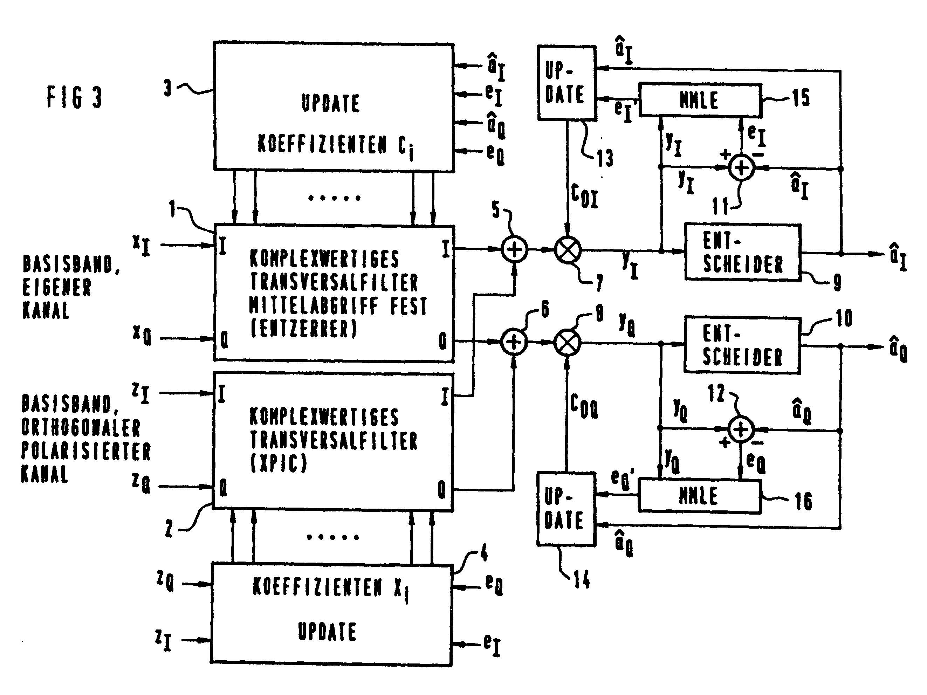

Eine Lösung hierfür bildet das erfindungsgemäße Verfahren, das anhand einer Anordnung nach Figur 3 erläutert wird. Diese Anordnung ist eine beispielhafte Implementierung des MMLE-Algorithmus in einem System zur Entzerrung und Kreuzpolarisationskompensation eines QAM-Signals, bei der der Mittelabgriff des Entzerrers dem Entzerrer und dem Einkoppelpunkt des XPICs als AGC nachgeschaltet ist. Hinsichtlich der Positionierung von $C_0$, d.h. der Anordnung des Mittelabgriffs des Entzerrers ist zu sagen, daß dieser in drei verschiedenen Positionen implementiert werden kann, nämlich als wirklicher Mittelabgriff im Entzerrer, als AGC (Automatic Gain Control) nach dem Entzerrer, wobei der Mittelabgriff des Entzerrers auf einen festen, von Null verschiedenen Wert (z.B. 1,0) gelegt werden muß, oder als AGC vor dem Entzerrer, wobei ebenfalls der Mittelabgriff des Entzerrers auf einen festen, von Null verschieden Wert gelegt werden muß. In allen Fällen funktioniert der MMLE-Algorithmus.

Die Anordnung nach Figur 3 entspricht in ihrem Aufbau im wesentlichen der Anordnung nach Figur 1, so daß eine detaillierte Beschreibung hier nicht mehr erforderlich ist und auf die vorstehenden Beschreibungsteile zu Figur 1 verwiesen wird. Die Anordnung nach Figur 3 enthält zusätzlich zwei MMLE-Einheiten 15, 16, die im Schaltungsteil für den Inphase-Anteil und den Quadratur-Anteil der Signale jeweils zwischen dem Subtraktionsglied 11 bzw. 12 und der Update-Einheit 13 bzw. 14 eingeschaltet ist.

Der MMLE-Algorithmus, der speziell für die Adaption von $c_0$ gedacht ist, enthält in seiner Fehlerschablone Anteile, die einen zu geringen Pegel erkennen, sowie Anteile, die auf zu große Pegel reagieren. Die Schablone ist eindimensional, d.h. die Fehler in I- und Q-Kanal werden unabhängig voneinander bearbeitet. Die Adaptionsregel ist dabei wie folgt:

1. Aus den Fehlern $e_I$ und $e_Q$ am Ausgang der Subtrahierer 11, 12 werden die Signale $e_I$' bzw. $e_Q$' gebildet, indem abhängig vom entzerrten Signal $y_I$ bzw. $y_Q$ die Fehler $e_I$ bzw. $e_Q$ entweder durchgeschaltet oder auf Null gelegt werden:

$$e_I'(n) = \xi\,(y_I(n)) \cdot e_I(n)$$

$$e_Q'(n) = \xi\,(y_Q(n)) \cdot e_Q(n) \qquad (2)$$

$$\xi(y) = \left\{ \begin{array}{l} 1 \text{ für } |y| < a_{min} \text{ (Bereich A)} \\ 1 \text{ für } |y| > a_{max} \text{ (Bereich B)} \\ 0 \text{ sonst} \end{array} \right.$$

wobei $a_{min}$ das betragsmäßig kleinste Symbol und $a_{max}$ das betragsmäßig größte Symbol bezeichnet.

2. Mit Hilfe dieser Signale wird nun die Adaption vorgenommen:

$$C_{0I}(m + 1) = C_{0I}(m) - \mu \cdot e_I'(n) \cdot r_I(n)$$

$$C_{0Q}(m + 1) = C_{0Q}(m) - \mu \cdot e_Q'(n) \cdot r_Q(n) \qquad (3)$$

wobei $r_I$ bzw. $r_Q$ für das Referenzsignal des I-bzw. Q-Kanals steht, $\mu$ die Schrittweite und m die Laufvariable der Iteration bedeuten.
Das Referenzsignal kann vor oder nach dem Entzerrer abgegriffen werden, also beispielsweise

$$r_I(n) = x_I(n),\ r_Q(n) = x_Q(n)$$

$$\text{oder } r_I(n) = \hat{a}_I(n),\ r_Q(n) = \hat{a}_Q(n) \qquad (4)$$

sein.

Im Ausführungsbeispiel nach Figur 3 besteht das Referenzsignal aus dem Signal $y_I$ bzw. $y_Q$ vor dem Entscheider 9 bzw. 10. Das Signal $e_I$' bzw. $e_Q$' am Ausgang der MMLE-Einheit 15 bzw. 16 wird an die jeweilige Update-Einheit 13 bzw. 14 gegeben, der zudem das entschiedene Signal $\hat{a}_I$ bzw. $\hat{a}_Q$ am Ausgang des Entscheiders 9 bzw. 10 zugeführt wird.

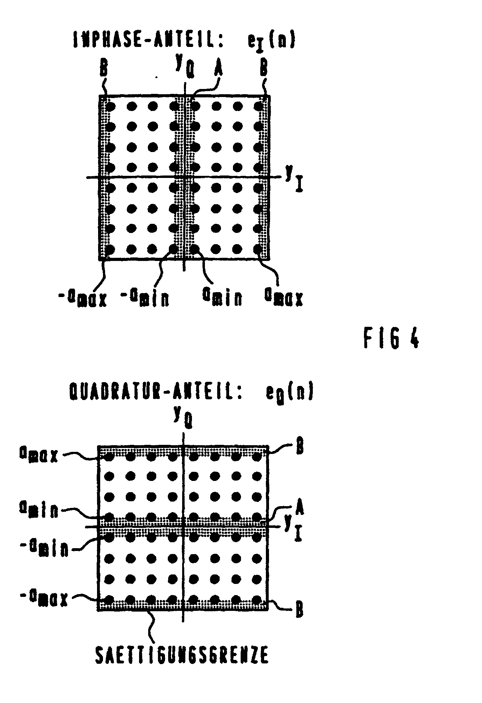

Für die folgenden Erklärungen wird davon ausgegangen, daß das Referenzsignal nach dem Entscheider abgegriffen wird, also $r(n) = \hat{a}(n)$ ist. Der Fehler wird also gewertet, wenn der Betrag $y(n)$ kleiner als $a_{min}$ oder größer als $a_{max}$ ist. Hierzu ist in Figur 4 die Schablone $\xi(y)$ am Beispiel eines 64 QAM-Systems dargestellt. Die Schablonen für den Inphase-Anteil $e_I(n)$ und den Quadratur-Anteil $e_Q(n)$ des Fehlers entsprechen im wesentlichen der Darstellung nach Figur 2. Zusätzlich zu den mit B bezeichneten grauen Bereichen im äußeren Randbereich sind hierbei noch mit A bezeichnete graue Bereiche in der Mitte der Schablone eingezeichnet. Diese gelten für positive und negative Werte von $a_{min}$, während die äußeren grauen Randbereiche für positive und negative Werte von $a_{max}$ gelten. Ein zu kleines Signal wird überwiegend in den Bereich A fallen und damit Fehlerbeiträge liefern, die ein entgegengesetztes Vorzeichen zu $\hat{a}(n)$ haben. $C_0$ wird daraufhin nach Gleichung 3 in positiver Richtung verändert. Zu große Signale haben mehr Anteile im Bereich B, wo e(n) gleiches Vorzeichen wie $\hat{a}$(n) hat. Damit wird $C_0$ verringert. Im grauen Bereich gilt also jeweils $\xi$(y) = 1; der Fehler wird durchgeschaltet. In den übrigen, hellen Bereichen ist $\xi$(y) = 0. In diesem Fall wird der Fehler auf Null gesetzt.

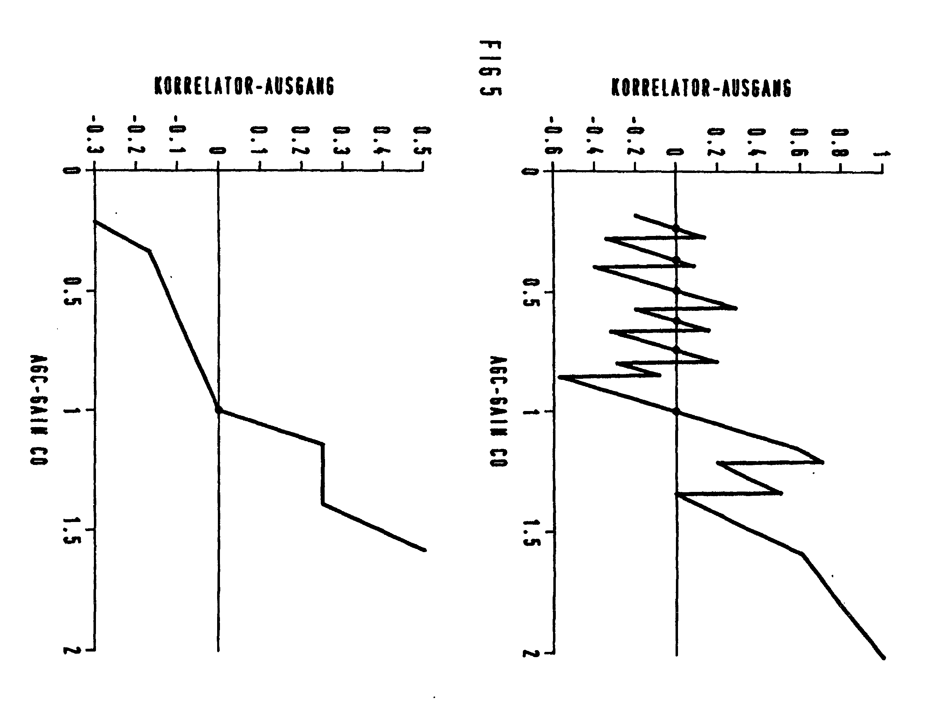

Nachfolgend wird die Wirkung des MMLE-Algorithmus anhand von zwei Diagrammen gemäß Figur 5 erläutert, in denen der Erwartungswert des Ausgangs des $C_0$-Korrelators über der Stellung von $C_0$ aufgetragen ist. Am Beispiel eines 64 QAM-Systems ist dies für zwei Fälle dargestellt, nämlich eine normale Korrelation und für Korrelation mit MMLE. Der Erwartungswert ergibt sich aus einer Mittelung über alle Symbole. Der Nominalpunkt liegt in diesem Beispiel bei $C_0$ = 1. Ist $C_0$ > 1, so muß der Korrelator im Mittel einen positiven Wert erzeugen, bei $C_0$ < 0 muß dieser Wert negativ sein. Der Nulldurchgang in positiver Richtung ist also der Fangzustand. Es ist deutlich sichtbar, daß ohne MMLE mehrfache positive Nulldurchgänge auftreten, die jeweils durch einen Stern gekennzeichnet sind. Dies bedeutet, daß es zu mehreren möglichen Fangzuständen kommt. Mit dem MMLE-Verfahren hingegen existiert nur ein einziger positiver Nulldurchgang bei $C_0$ = 1.

In den Diagrammen ist auch zu erkennen, daß die Detektorsteilheit im Fangzustand beim MMLE-Algorithmus kleiner ist als bei normaler, beispielsweise Zero-Forcing Korrelation. Es ist daher sinnvoll, den MMLE-Algorithmus lediglich während der Einlaufphase des Systems zu verwenden, wo größtmögliche Robustheit gefragt ist. Im eingerasteten Zustand wird man auf normale Korrelation zurückschalten, da dann ein möglichst geringes Koeffizientengeräusch bei gegebener Regelbandbreite gefordert ist.

Über die Quantisierung der Korrelationsbeiträge wurden bisher keine Aussagen gemacht. Im allgemeinen ist es bei digitalen wie bei analogen Systemen schwierig, eine echte Multiplikation e(n) $\cdot$ $\hat{a}$(n) durchzuführen. Daher wird üblicherweise von mindestens einem der beiden Signale nur das Vorzeichen verwendet. Es ergeben sich folgende Kombinationen:

$$\text{I:} \qquad C_0(m + 1) = C_0(m) - \mu \cdot e'(n) \cdot \hat{a}(n)$$

$$\text{II:} \qquad C_0(m + 1) = C_0(m) - \mu \cdot e'(n) \cdot \text{sgn}(\hat{a}(n))$$

$$\text{III:} \qquad C_0(m + 1) = C_0(m) - \mu \cdot \text{sgn}(e'(n)) \cdot \hat{a}(n)$$

$$\text{IV:} \qquad C_0(m + 1) = C_0(m) - \mu \cdot \text{sgn}(e'(n)) \cdot \text{sgn}(\hat{a}(n))$$

$$\text{sgn(x)} = \begin{cases} -1 \text{ für } x < 0 \\ 1 \text{ für } x \geq 0 \end{cases}$$

Das MMLE-Verfahren kann in allen vier Fällen angewendet werden. Die Fälle III und IV weisen jedoch die Besonderheit auf, daß der Fehler nur als Vorzeichen in die Adaption eingeht. Er kann daher nicht auf Null gesetzt werden. In diesem Fall wird in Gleichung (2) für $\xi$(y) = 0 der Fehler auf eine alternierende -1/+1/-1/+1/-Folge gelegt.

**Patentansprüche**

**1.** Verfahren zur Kanalentzerrung und Kompensation von Kreuzpolarisations-Interferenzen XPI, in Übertragungssystemen mit vielstufiger Quadratur-Amplitudenmodulation QAM, oder Pulsamplitudenmodulation, PAM, unter Verwendung von adaptiven. Transversalfiltern mit nachfolgendem Entscheider und Korrelator zur Gewinnung der Koeffizienten für die Einstellung des Entzerrers, **gekennzeichnet durch** einen Maximum/Minimum-Level-Error-Algorithmus, MMLE-Algorithmus, mit einer eindimensionalen Fehlerschablone zur richtigen Einstellung des Mittelabgriffs des Entzerrers derart, dass zur Ermittlung der Fehlersignale ($e_I$, $e_Q$) von Inphase Anteil und Quadratur-Anteil das entzerrte Signal ($Y_I$, $Y_Q$) vor dem Entscheider und der entschiedene Wert ($\hat{a}_I$, $\hat{a}_Q$) voneinander subtrahiert und zur Fehlerwertung die Fehlersignale ($e_I$, $e_Q$) und das entzerrte Signal ($Y_I$, $Y_Q$) auf den MMLE-Algorithmus gegeben werden, der in seiner Fehlerschablone Anteile enthält, die einen zu geringen Pegel des entzerrten Signals ($Y_I$, $Y_Q$) erkennen, sowie Anteile, die auf zu große Pegel des entzerrten Signals ($Y_I$, $Y_Q$) reagieren und dass aus den Fehlern ($e_I$, $e_Q$) Signale ($e_I'$, $e_Q'$) gebildet werden, indem abhängig vom entzerrten Signal ($Y_I$, $Y_Q$) der Fehler entweder durchgeschaltet oder ausgeblendet und mit Hilfe dieser Signale die Adaption vorgenommen wird, wobei der Fehler gewertet wird, wenn der Betrag des entzerrten Signals $y(n)$ kleiner als ein Wert $a_{min}$ oder größer als ein Wert $a_{max}$ ist, der in der Schablone im mittigen bzw. im Randbereich liegt.

2. Verfahren nach Anspruch 1, **dadurch gekennzeichnet, dass** die Ausblendung in der Weise erfolgt, dass der Fehler auf Null gelegt wird.

3. Verfahren nach Anspruch 1, **dadurch gekennzeichnet, dass** der als Vorzeichen in die Adaption eingehende Fehler auf eine alternierende -1/+1/-1/+1 Folge gelegt wird.

4. Verfahren nach einem der Ansprüche 1 bis 3, **dadurch gekennzeichnet, dass** zur Adaption die aus den Fehlern ($e_I$, $e_Q$) gebildeten Signale ($e_I'$, $e_Q'$) und ein im Übertragungsweg abgegriffenes Signals als Referenzsignal jeweils einem Korrelator zugeführt werden.

5. Verfahren nach Anspruch 4, **dadurch gekennzeichnet, dass** das Referenzsignal aus dem Signal ($x_I$, $x_Q$) vor dem Entzerrer, dem Signal ($Y_I$, $Y_Q$) vor dem Entscheider oder dem entschiedenen Signal ($â_I$, $â_Q$) besteht.

6. Verfahren nach Anspruch 4 oder 5, **dadurch gekennzeichnet, dass** zur Gewinnung des Korrelationsbeitrages von mindestens einem der beiden Signale nur das Vorzeichen verwendet wird.

7. Verfahren nach einem der Ansprüche 1 bis 6, **dadurch gekennzeichnet, dass** der MMLE-Algorithmus nur während der Einlaufphase des Systems verwendet und im eingerasteten Zustand auf eine andere Korrelation, z. B. Zero-Forcing Kriterium, umgeschaltet wird.

8. Verfahren nach einem der Ansprüche 1 bis 7, **dadurch gekennzeichnet, dass** die Einstellung ($C_0$) des Mittelabgriffs des Entzerrers als Hauptabgriff im Entzerrer implementiert ist.

9. Verfahren nach einem der Ansprüche 1 bis 7, **dadurch gekennzeichnet, dass** die Einstellung des Mittelabgriffs des Entzerrers als automatische Verstärkungsregelung, AGC = Automatic Gain Control, nach dem Entzerrer implementiert und der Mittelabgriff auf einen festen, von Null verschiedenen Wert gelegt ist.

10. Verfahren nach einem der Ansprüch 1 bis 7, dadurch **gekennzeichent**, dass die Einstellung des Mittelabgriffs des Entzerrers als automatische Verstärkungsregelung, AGC, vor dem Entzerrer implementiert und der Mittelabgriff auf einen festen, von Null verschiedenen Wert gelegt ist.

**Claims**

1. A method of channel equalisation and compensation for cross-polarisation interference, XPI, in transmission systems with multi-stage quadrature amplitude modulation, QAM, or pulse amplitude modulation, PAM, using adaptive transversal filters with following decision circuits and correlators for deriving the coefficients for adjusting the equaliser, **characterized by** a maximum/minimum level error algorithm, MMLE algorithm, with a one-dimensional error template for correct adjustment of the centre tap of the equaliser such that, in order to determine the error signals ($e_I$, $e_Q$) of the in-phase and quadrature components, the equalised signal ($Y_I$, $Y_Q$) preceding the decision circuit and the decision value ($â_I$, $â_Q$) are subtracted from one another and the error signals ($e_I$, $e_Q$) and the equalised signal ($Y_I$, $Y_Q$) are applied to the MMLE algorithm for the error evaluation, which algorithm includes in its error template components which recognise a level of the equalised signal ($Y_I$, $Y_Q$) which is too low as well as components which react to a level of the equalised signal ($Y_I$, $Y_Q$) which are too high and in that signals ($e_I'$, $e_Q'$) are formed from the error signals ($e_I$, $e_Q$) in which the errors are either switched through or gated out, in dependence on the equalised signal ($Y_I$, $Y_Q$) and the adaptation is effected with the aid of these signals, wherein the errors are evaluated when the value of the equalised signal $y(n)$ is smaller than a value $a_{min}$ or greater than a value $a_{max}$ which values lie in the template in the central and edge regions respectively.

2. A method according to claim 1, **characterized in that** the gating out is effected in a manner such that the error is set to zero.

**3.** A method according to claim 1, **characterized in that** an alternating sequence - 1/+1/-1/+1 is applied as the sign for the error entering the adaptation.

**4.** A method according to any of claims 1 to 3, **characterized in that** the signals ($e_I$', $e_Q$') formed from the errors ($e_I$, $e_Q$) and a signal picked off from the transmission path as a reference signal are applied to a correlator for the adaptation.

**5.** A method according to claim 4, **characterized in that** the reference signal consists of the signal ($x_I$, $x_Q$) preceding the equaliser, the signal ($Y_I$, $Y_Q$) preceding the decision circuit or the decision signal ($â_I$, $â_Q$).

**6.** A method according to claim 4 or 5, **characterized in that** only the sign is used for deriving the correlation contribution of at least one of the signals.

**7.** A method according to any of claims 1 to 6, **characterized in that** the MMLE algorithm is utilised only during the running-in phase of the system and a switch is made in the locked-in state to another correlation, e.g. a zero-forcing criterion.

**8.** A method according to any of claims 1 to 7, **characterized in that** the adjustment ($C_0$) of the centre tap of the equaliser is implemented as the main tap in the equaliser.

**9.** A method according to any of claims 1 to 7, **characterized in that** the adjustment of the centre tap of the equaliser is implemented as automatic regulation of the gain, AGC = automatic gain control, following the equaliser and the centre tap is set to a fixed value different from zero.

**10.** A method according to any of claims 1 to 7, **characterized in that** the adjustment of the centre tap of the equaliser is implemented as automatic regulation of the gain, AGC = automatic gain control, preceding the equaliser and the centre tap is set to a fixed value different from zero.

**Revendications**

**1.** Procédé pour l'égalisation de canaux et la compensation d'interférences de polarisation croisée, XPI, dans des systèmes de transmission à modulation d'amplitude déphasée en quadrature, QAM, ou à modulation d'impulsions en amplitude, PAM, en utilisant des filtres transversaux adaptatifs suivis d'un décideur et d'un corrélateur pour obtenir les coefficients pour le réglage de l'égaliseur, **caractérisé par** un algorithme d'erreur de niveau maximum/minimum, algorithme MMLE, avec un gabarit d'erreur unidimensionnel pour le réglage correct de la prise centrale de l'égaliseur, de telle sorte que pour déterminer les signaux d'erreur ($e_r$, $e_Q$) de la partie en phase et de la partie déphasée en quadrature, le signal égalisé ($Y_r$, $Y_Q$) en amont du décideur et la valeur décidée ($â_r$, $â_Q$) sont soustraits l'un de l'autre, et que pour évaluer l'erreur les signaux d'erreur ($e_r$, $e_Q$) et le signal égalisé ($Y_r$, $Y_Q$) sont placés sur l'algorithme MMLE qui, dans son gabarit d'erreur, contient des parts qui détectent un niveau trop bas du signal égalisé ($Y_r$, YQ) ainsi que des parts réagissant à des niveaux trop importants du signal égalisé ($Y_r$, $Y_Q$), et qu'à partir des erreurs ($e_r$', $e_Q$) les signaux ($e_r$', $e_Q$') sont formés en ce qu'en fonction du signal égalisé ($Y_r$, $Y_Q$) l'erreur est soit commutée soit supprimée et qu'à l'aide de ces signaux l'adaptation est effectuée, l'erreur étant évaluée si le montant du signal égalisé y(n) est inférieur à une valeur $a_{min}$ ou supérieur à une valeur $a_{max}$, qui sur le gabarit se trouve dans la zone centrale ou dans la zone périphérique.

**2.** Procédé selon la revendication 1, **caractérisé en ce que** la suppression est effectuée en plaçant l'erreur à zéro.

**3.** Procédé selon la revendication 1, **caractérisé en ce que** l'erreur prise en compte pour l'adaptation sous la forme d'un signe est placée sur une séquence alternante de -1/+1/-1/+1.

**4.** Procédé selon l'une quelconque des revendications 1 à 3, **caractérisé en ce que** pour l'adaptation les signaux ($e_r$', $e_Q$') formés à partir des erreurs ($e_r$, $e_Q$) et un signal pris sur la voie de transmission sont respectivement transmis comme signal de référence à un corrélateur.

**5.** Procédé selon la revendication 4, **caractérisé en ce que** le signal de référence est soit le signal ($x_r$, $x_Q$) en amont de l'égaliseur, soit le signal ($Y_r$, $Y_Q$) en amont du décideur soit le signal décidé ($â_r$, $â_Q$).

6. Procédé selon la revendication 4 ou 5, **caractérisé en ce que** pour obtenir l'apport de corrélation d'au moins l'un des deux signaux on n'utilise que le signe.

7. Procédé selon l'une quelconque des revendications 1 à 6, **caractérisé en ce que** l'algorithme MMLE n'est utilisé que pendant la phase de démarrage du système et commuté, à l'état enclenché, sur une autre corrélation, par exemple le critère de forçage à zéro.

8. Procédé selon l'une quelconque des revendications 1 à 7, **caractérisé en ce que** le réglage (Co) de la prise centrale de l'égaliseur est implémenté comme prise principale dans l'égaliseur.

9. Procédé selon l'une des revendications 1 à 7, **caractérisé en ce que** le réglage de la prise centrale de l'égaliseur est implémenté comme réglage de gain automatique, AGC = Automatic Gain Control, en aval de l'égaliseur, et **en ce que** le prise centrale est placée sur une valeur fixe différente de zéro.

10. Procédé selon l'une quelconque des revendications 1 à 7, **caractérisé en ce que** le réglage de la prise centrale de l'égaliseur est implémenté comme réglage de gain automatique, AGC, en amont de l'égaliseur, et **en ce que** la prise centrale est placée sur une valeur fixe différente de zéro.

FIG 1

EP 0 648 025 B1

INPHASE-ANTEIL: $e_I(n)$

FIG 2

QUADRATUR-ANTEIL: $e_Q(n)$

SAETTIGUNGSGRENZE

FIG 3

EP 0 648 025 B1

INPHASE-ANTEIL: $e_I(n)$

FIG 4

QUADRATUR-ANTEIL: $e_Q(n)$

SAETTIGUNGSGRENZE

FIG 5